# FASCICULE DE BREVET EUROPEEN

(11) **EP 1 445 581 B1**
(45) Date de publication et mention de la délivrance du brevet: **23.05.2012**
(21) Numéro de dépôt: 04290138.9
(22) Date de dépôt: 20.01.2004
(51) Int. Cl.: G01C 19/56

(54) **Résonateur hémisphérique à électrode de garde divisée**
Hemisphärischer Resonator mit zweiteiliger Schutzelektrode
Hemispherical resonator with a divided guard electrode

(30) Priorité: 06.02.2003 FR 0301382
(43) Date de publication de la demande: 11.08.2004
(73) Titulaire: Sagem Défense Sécurité, 75015 Paris (FR)
(72) Inventeur: Renault, Alain, 95300 Pontoise (FR); Vandebeuque, Paul, 95100 Argenteuil (FR)
(74) Mandataire: Fruchard, Guy

(56) Documents cités:
- FR-A- 2 792 722
- US-A- 3 680 391
- US-A- 4 951 508

## Description

La présente invention concerne un résonateur hémisphérique pour une utilisation en tant que capteur de rotation inertiel.

### ARRIERE PLAN DE L'INVENTION

On connaît du document FR-A-2 792 722 un résonateur hémisphérique comprenant un organe vibrant en forme de cloche métallisée fixée à un socle qui porte des électrodes principales s'étendant en regard d'un bord de la cloche et une électrode de garde adjacente aux électrodes principales.

Les électrodes principales servent d'une part à une commande de mise en vibration de la cloche en appliquant au moins une tension alternative aux électrodes principales tout en maintenant la cloche à un potentiel constant, et d'autre part à détecter une vibration de la cloche en recueillant un signal de détection sur les électrodes principales.

Dans ce mode de réalisation, l'électrode de garde est mise à la masse et a pour fonction de réduire la diaphonie entre les électrodes.

### OBJET DE L'INVENTION

Dans certaines circonstances, en particulier lorsque le résonateur est utilisé en mode gyroscopique avec un signal de commande de quadrature continu, il serait toutefois souhaitable de pouvoir augmenter le nombre d'électrodes tout en minimisant le nombre de connexions nécessaires pour commander ces électrodes.

### BREVE DESCRIPTION DE L'INVENTION

Selon l'invention, on propose un résonateur hémisphérique du type décrit dans le document précité, dans lequel l'électrode de garde est divisée en au moins deux parties comprenant chacune des électrodes auxiliaires s'étendant entre les électrodes principales, selon la revendication 1.

Ainsi, l'électrode de garde peut être utilisée soit dans sa fonction habituelle en mettant les deux parties à la masse, soit comme électrode de commande et/où de détection en appliquant des signaux appropriés à chacune des parties de l'électrode de garde.

Selon un mode de réalisation avantageux de l'invention, l'électrode de garde comprend une première partie en forme de disque central à partir duquel les électrodes auxiliaires s'étendent radialement vers l'extérieur et une seconde partie en forme d'anneau qui s'étend autour des électrodes principales et à partir duquel les électrodes auxiliaires s'étendent radialement vers l'intérieur. De préférence, les électrodes auxiliaires appartenant à chacune des parties de l'électrode de garde s'étendent entre les électrodes principales selon une alternance régulière.

### BREVE DESCRIPTION DES DESSINS

D'autres caractéristiques et avantages de l'invention apparaîtront à la lecture de la description qui suit d'un mode de réalisation particulier de l'invention en relation avec les figures ci-jointes parmi lesquelles :
- la figure 1 est une vue en coupe axiale du résonateur selon la ligne I-I de la figure 2,
- la figure 2 est une vue de dessus des électrodes du résonateur en coupe selon la ligne II-II de la figure 1.

### DESCRIPTION DETAILLEE DE L'INVENTION

Pour une meilleure compréhension de l'invention, le résonateur a été représenté à une échelle très agrandie et en exagérant les épaisseurs des électrodes et des entrefers.

Dans le mode de réalisation illustré, le résonateur comporte de façon connue en soi un organe vibrant hémisphérique 1, par exemple une cloche réalisée en silice et fixée par une tige 4 à un socle 3. La surface interne de la cloche 1 ainsi que le bord de celle-ci et la tige 4 sont recouverts d'une couche de métal 2. Le socle 3 porte des électrodes principales désignées par la référence numérique générale 5 et par les références numériques particulières 5.1, 5.2..., 5.8 permettant de les identifier individuellement. Les électrodes 5 s'étendent en regard du bord de l'organe vibrant 1.

Dans le mode de réalisation illustré, le résonateur comporte en outre une électrode de garde généralement désignée en 6 qui, selon l'invention, est divisée en deux parties 6.1 et 6.2 comprenant chacune quatre électrodes auxiliaires, portant la référence numérique générale 7, et les références numériques particulières 7.1 pour les électrodes auxiliaires de la partie 6.1, et 7.2 pour les électrodes auxiliaires de la partie 6.2. Les électrodes 7.1 et 7.2 s'étendent de façon alternée entre les électrodes 5. La partie 6.1 de l'électrode de garde est constituée d'un disque central à partir duquel les électrodes auxiliaires 7.1 s'étendent radialement vers l'extérieur tandis que la partie 6.2 de l'électrode de garde est constituée d'un anneau circulaire s'étendant autour des électrodes 5 et comportant des électrodes auxiliaires 7.2 radialement en saillie vers l'intérieur.

Pour une mise en oeuvre en mode gyrométrique, les deux parties 6.1 et 6.2 de l'électrode de garde sont toutes les deux mises à la masse et les signaux de commande d'amplitude, de commande de précession, et de commande de quadrature, sont appliqués selon différents modes de mise en oeuvre connus par eux-mêmes.

Pour une mise en oeuvre en mode gyroscopique, c'est-à-dire une mise en oeuvre comportant seulement un signal de commande d'amplitude et un signal de commande de quadrature, il est préférable d'appliquer le signal de commande de quadrature sous forme d'un signal continu modulé en amplitude afin de minimiser la dérive du résonateur. Dans ce cas la commande de quadrature n'est efficace que dans la mesure où le signal de commande de quadrature subit une intermodulation résultant d'une variation de l'entrefer en regard de l'électrode de commande à laquelle le signal de commande de quadrature est appliqué, c'est-à-dire dans la mesure où la vibration à laquelle la cloche est soumise ne comporte pas un noeud en coïncidence avec l'électrode à laquelle le signal de commande de quadrature est appliqué.

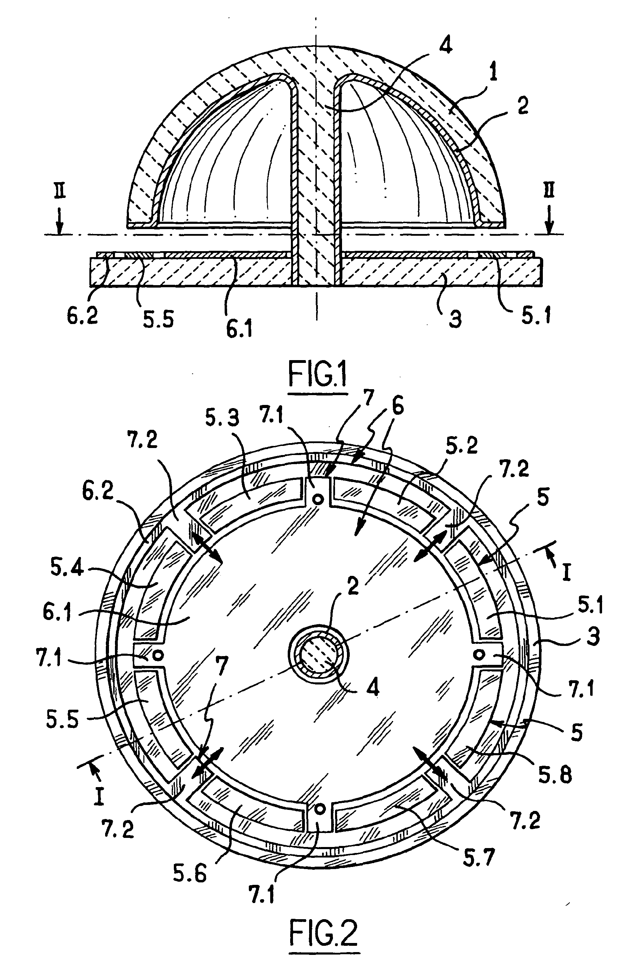

Cependant, dans un fonctionnement en mode gyroscopique, l'orientation de la vibration varie en fonction de la rotation à laquelle le résonateur est soumis. En supposant que le signal de commande d'amplitude initial soit appliqué pour orienter la vibration comme illustré sur la figure 2, c'est-à-dire avec des ventres de vibration dans les intervalles entre les électrodes 5.1 et 5.2, 5.3 et 5.4, 5.5 et 5.6, 5.7 et 5.8 comme illustré par une flèche double en trait épais sur la figure, et simultanément des noeuds dans les intervalles entre les électrodes'5.2 et 5.3, 5.4 et 5.5, 5.6 et 5.7, 5.8 et 5.1 comme illustré par des petits ronds en trait épais sur la figure 2, cette orientation ne va pas rester constante lorsque le résonateur va être soumis à une rotation. En particulier, lorsqu'à partir de la position illustrée le résonateur est soumis à un mouvement faisant tourner la vibration dans le sens des aiguilles d'une montre, le noeud qui était initialement entre les électrodes 5.2 et 5.3 se déplace jusqu'au moment où ce noeud est voisin du milieu de l'électrode 5.2. Dans cette situation, la commande de quadrature appliquée à l'électrode 5.2 perd son efficacité. Le résonateur ayant la structure selon l'invention permet d'éviter cette perte d'efficacité en appliquant le signal de commande de façon alternée aux électrodes principales et aux électrodes auxiliaires.

A titre d'exemple non limitatif, on partira de la situation où le résonateur est initialement mis en oeuvre en appliquant une commande d'amplitude CA aux électrodes principales 5.1, 5.2, 5.5 et 5.6. Dans une phase de mise en vibration, le signal de commande d'amplitude CA est appliqué à la fréquence de résonance de la cloche 1 aux quatre électrodes principales précitées qui sont modalement en quadrature, de sorte que la cloche 1 entre en vibration suivant l'orientation illustrée sur la figure 2 et décrite précédemment. Dans une phase d'entretien il est possible de passer le signal de commande d'amplitude CA à une fréquence double de la fréquence de résonance. Pour un fonctionnement en mode gyroscopique, un signal de commande de quadrature CQ continu est appliqué en combinaison avec le signal de commande d'amplitude. Dans l'exemple décrit, un signal CA - CQ est appliqué aux électrodes 5.1 et 5.5 tandis qu'un signal CA + CQ est appliqué aux électrodes 5.2 et 5.6. Lorsque le résonateur est soumis à un mouvement comme indiqué précédemment, et que le noeud de la vibration coïncide avec le milieu de l'électrode 5.2, c'est-à-dire que l'entrefer n'est plus soumis à une variation en regard de l'électrode 5.2, l'intermodulation du signal de quadrature disparaît et celui-ci perd donc son efficacité. En utilisant la structure du résonateur selon l'invention, on évite cette perte d'efficacité en basculant alors le signal CA - CQ sur la partie 6.1 de l'électrode de garde et le signal CA + CQ sur la partie 6.2 de l'électrode de garde. Le noeud qui est en regard de l'électrode principale 5.2 se trouve alors à mi-chemin entre les électrodes auxiliaires 7.1 et 7.2 respectivement soumises aux signaux CA - CQ et CA + CQ. L'entrefer en regard des électrodes auxiliaires 7.1 et 7.2 est donc variable de sorte que la commande de quadrature est soumise à une intermodulation. La commande de quadrature retrouve donc sa pleine efficacité.

En utilisant la structure particulière de l'invention, les signaux de commande sont ainsi alternativement appliqués aux électrodes principales 5 et aux électrodes secondaires 7 au fur et à mesure de la rotation de la vibration afin de maintenir les noeuds de vibration entre les électrodes auxquelles le signal de commande de quadrature est appliqué.

Bien entendu, l'invention n'est pas limitée au mode de réalisation décrit et est susceptible de variantes qui apparaîtront à l'homme de métier sans sortir du cadre de l'invention tel que défini par les revendications.

En particulier; bien que la mise en oeuvre de l'invention ait été décrite en relation avec l'application d'un signal de commande à quatre électrodes seulement, on peut réaliser une commande et une détection avec un multiplexage, ce qui permet d'augmenter la dynamique de la commande et de la détection. On peut également utiliser simultanément huit électrodes en commande et en détection en appliquant la commande d'amplitude CA à la cloche à une fréquence double de la fréquence de résonance et en appliquant un signal de commande de quadrature continu aux huit électrodes actives.

Bien que l'électrode de garde ait été illustrée selon une division en deux parties seulement, on peut prévoir pour des applications particulières, de diviser l'électrode de garde en plus de deux parties, ce qui permet de différencier de façon plus importante les commandes sur les électrodes auxiliaires.

De même, bien que l'invention ait été illustrée avec un résonateur comportant huit électrodes principales seulement, on peut réaliser un résonateur comportant un nombre plus important d'électrodes principales, les électrodes auxiliaires venant de la même façon s'intercaler entre les électrodes principales par une subdivision de l'électrode de garde en plusieurs parties.

## Revendications

1. Résonateur hémisphérique comportant une cloche (1) fixée à un socle (3) comportant une surface qui porte des électrodes principales (5) en regard d'un bord plan de la cloche, et une électrode de garde (6) s'étendant sur ladite surface de manière adjacente aux électrodes principales (5), **caractérisé en ce que** l'électrode de garde (6) est divisée en au moins deux parties (6.1, 6.2) comprenant chacune des électrodes auxiliaires (7.1, 7.2) s'étendant entre les électrodes principales (5).

2. Résonateur selon la revendication 1, **caractérisé en ce que** l'électrode de garde (6) comporte une première partie (6.1) en forme de disque central à partir duquel les électrodes auxiliaires (7.1) s'étendent radialement vers l'extérieur, et une seconde partie (6.2) en forme d'anneau qui s'étend autour des électrodes principales et à partir duquel les électrodes auxiliaires (7.2) s'étendent radialement vers l'intérieur.

3. Résonateur selon la revendication 1, **caractérisé en ce que** les électrodes auxiliaires (7) appartenant à chacune des parties de l'électrode de garde (6) s'étendent entre les électrodes principales (5) selon une alternance régulière.

4. Procédé de commande d'un résonateur hémisphérique selon l'une des revendications précédentes pour un fonctionnement en mode gyroscopique, **caractérisé en ce qu'**il comprend l'étape d' appliquer un signal de commande en amplitude aux électrodes principales pour mettre le résonateur en vibration et l'étape d'appliquer également un signal de commande en quadrature en combinaison avec le signal d'amplitude alternativement aux électrodes principales et aux deux parties de l'électrode de garde au fur et à mesure d'une rotation de la vibration.

## Claims

1. A hemispherical resonator comprising a bell (1) fixed on a base (3) which has a surface carrying main electrodes (5) in register with a plane edge of the bell, and a shield electrode (6) extending over said surface adjacent to the main electrodes (5), the resonator being **characterized in that** the shield electrode (6) is subdivided into at least two portions (6.1, 6.2) each presenting auxiliary electrodes (7.1, 7.2) extending between the main electrodes (5).

2. A resonator according to claim 1, **characterized in that** the shield electrode (6) comprises a first portion (6.1) in the form of a central disk from which the auxiliary electrodes (7.1) extend radially outwards, and a second portion (6.2) in the form of a ring which extends around the main electrodes and from which the auxiliary electrodes (7.2) extend radially inwards.

3. A resonator according to claim 1, **characterized in that** the auxiliary electrodes (7) belonging to each of the portions of the shield electrode (6) extend between the main electrodes (5) in regular alternation.

4. A method of controlling a hemispherical resonator according to any preceding claim for operation in free gyro mode, the method being **characterized in that** it comprises the step of applying an amplitude control signal to the main electrodes so as to subject the resonator to vibration and the step of also applying a quadrature control signal in combination with the amplitude signal in alternation to the main electrodes and to both portions of the shield electrode progressively with turning of the vibration.

## Patentansprüche

1. Halbkugelförmiger Resonator, umfassend eine Glocke (1), die an einem Sockel (3) befestigt ist, der eine Oberfläche umfasst, die gegenüber einem ebenen Rand der Glocke Hauptelektroden (5) trägt, sowie eine Schutzelektrode (6), die sich auf der genannten Oberfläche benachbart zu den Hauptelektroden (5) erstreckt, **dadurch gekennzeichnet, dass** die Schutzelektrode (6) in mindestens zwei Teile (6.1, 6.2) unterteilt ist, die jeweils Hilfselektroden (7.1, 7.2) umfassen, die sich zwischen den Hauptelektroden (5) erstrecken.

2. Resonator nach Anspruch 1, **dadurch gekennzeichnet, dass** die Schutzelektrode (6) einen ersten Teil (6.1) in Form einer zentralen Scheibe umfasst, ab der sich die Hilfselektroden (7.1) radial nach außen erstrecken, sowie einen zweiten Teil (6.2) in Form eines Ringes, der sich um die Hauptelektroden herum erstreckt und ab dem sich die Hilfselektroden (7.2) radial nach innen erstrecken.

3. Resonator nach Anspruch 1, **dadurch gekennzeichnet, dass** sich die Hilfselektroden (7), die zu jedem der Teile der Schutzelektrode (6) gehören, im regelmäßigen Wechsel zwischen den Hauptelektroden (5) erstrecken.

4. Verfahren zum Steuern eines halbkugelförmigen Resonators nach einem der vorhergehenden Ansprüche für einen Betrieb im gyroskopischen Modus, **dadurch gekennzeichnet, dass** es den Schritt des Anlegens eines Amplitudensteuersignals an den Hauptelektroden umfasst, um den Resonator in Schwingung zu versetzen, sowie gleichfalls den Schritt des
Anlegens eines Quadratursteuersignals in Kombination mit dem Amplitudensignal abwechselnd an den Hauptelektroden und den beiden Teilen der Schutzelektrode je nach Drehung der Schwingung.
